# EUROPÄISCHE PATENTSCHRIFT

(11) **EP 2 016 597 B1**
(45) Veröffentlichungstag und Bekanntmachung des Hinweises auf die Patenterteilung: **22.06.2011**
(21) Anmeldenummer: 07724719.5
(22) Anmeldetag: 28.04.2007
(51) Int. Cl.: H01F 1/00, H01F 41/30

(54) **VERFAHREN ZUR HERSTELLUNG EINES ELEMENTS, UMFASSEND EINE VIELZAHL VON NANOZYLINDERN AUF EINEM SUBSTRAT**
METHOD FOR THE PRODUCTION OF AN ELEMENT COMPRISING A MULTITUDE OF NANOCYLINDERS ON A SUBSTRATE
PROCÉDÉ DE FABRICATION D'UN ÉLÉMENT, COMPORTANT UNE PLURALITÉ DE NANOCYLINDRES SUR UN SUBSTRAT

(30) Priorität: 11.05.2006 DE 102006021940
(43) Veröffentlichungstag der Anmeldung: 21.01.2009
(73) Patentinhaber: Karlsruher Institut für Technologie, 76131 Karlsruhe (DE)
(72) Erfinder: ELLRICH, Jens, 65203 Wiesbaden (DE); YONG, Lei, Hefei 230031 (CN); HAHN, Horst, 64342 Seeheim-Jugenheim (DE)
(86) Internationale Anmeldenummer: PCT/EP2007/003792
(87) Internationale Veröffentlichungsnummer: WO 2007/131617

(56) Entgegenhaltungen:
- US-A1- 2002 145 826
- HUANG Y H ET AL: "COPT AND FEPT NANOWIRES BY ELECTRODEPOSITION" JOURNAL OF APPLIED PHYSICS, AMERICAN INSTITUTE OF PHYSICS. NEW YORK, US, Bd. 91, Nr. 10, 15. Mai 2002 (2002-05-15), Seiten 6869-6871, XP001112511 ISSN: 0021-8979
- LEI ET AL: "Shape and size control of regularly arrayed nanodots fabricated using ultrathin alumina masks" CHEMISTRY OF MATERIALS, Bd. 17, 13. Januar 2005 (2005-01-13), Seiten 580-585, XP002448823 in der Anmeldung erwähnt
- LIANG J ET AL: "TWO-DIMENSIONAL LATERAL SUPERLATTICES OF NANOSTRUCTURES: NONLITHOGRAPHIC FORMATION BY ANODIC MEMBRANE TEMPLATE" JOURNAL OF APPLIED PHYSICS, AMERICAN INSTITUTE OF PHYSICS. NEW YORK, US, Bd. 91, Nr. 4, 15. Februar 2002 (2002-02-15), Seiten 2544-2546, XP001124585 ISSN: 0021-8979
- HALLEY D ET AL: "L10 ordering at different stages of Fe0.5Pd0.5 epitaxial growth" JOURNAL OF APPLIED PHYSICS, AMERICAN INSTITUTE OF PHYSICS. NEW YORK, US, Bd. 91, Nr. 12, 15. Juni 2002 (2002-06-15), Seiten 9757-9763, XP012055493 ISSN: 0021-8979

## Beschreibung

Die Erfindung betrifft ein Verfahren zur Herstellung eines Elements, das ein Substrat, auf das eine Vielzahl von Nanozylindern aufgebracht ist, umfasst.

Dünne Legierungsfilme aus metallischen Komponenten auf geeigneten Substraten werden als magnetische Speichermedien, als Schaltelemente oder als Sensoren eingesetzt, wobei für Speicheranwendungen der Ausrichtung der magnetischen Momente relativ zur Schichtoberfläche eine dominierende Bedeutung zukommt.

Eine Verkleinerung der Bit-Speichergrösse kann durch die Verringerung des magnetischen Volumens, in dem die Information gespeichert wird, erzielt werden. Eine derartige Verringerung bewirkt jedoch zwangsweise ein Verlust in der thermischen Stabilität der gespeicherten Information (Superparamagnetisches Limit, thermische Anregung von Ummagnetisierungsvorgängen oberhalb einer charakteristischen Temperatur), wodurch die gegenwärtig erreichbare Speicherdichte begrenzt ist.

Durch Auswahl geeigneter Materialklassen und durch Strukturierungsmethoden lässt sich die Speicherdichte signifikant erhöhen. Hierzu ist es erforderlich, Systeme einzusetzen, die eine senkrechte magnetokristalline Anisotropie zeigen. Zur Zeit werden hierfür ternäre Materialkombinationen wie Co-Cr-Pt, die in aufwendigen Herstellungsverfahren eingebracht werden müssen und eine thermische Behandlung erfordern, eingesetzt.

Aus Yong Lei und Wai-Kin Chim, Shape and Size Control of Regularly Arrayed Nanodots Fabricated Using Ultrathin Alumina Masks, Chem. Mater. 2005, 17, S. 580-585, ist die Herstellung von hochgeordneten halbleitenden und metallischen Strukturen aus Nanoteilchen mit einstellbarer Größe und Form bekannt. Diese Strukturen werden mittels nanoporösen Membranen aus Al₂O₃, die auch als ultradünne Aluminiummasken oder *UTAMs* bezeichnet werden, auf Si- und Si/SiO₂-Substrate aufgebracht. Größe und Form der Strukturen lassen sich durch das Aspektverhältnis der Aperturen der durchgehenden Poren dieser Membranen sowie durch die Menge an Material einstellen. Diese Masken lassen sich auch bei höheren Temperaturen für epitaktisches Wachstum einsetzen. Mit diesem Verfahren konnten bisher geordnete Strukturen aus halbleitenden Nanopartikeln mit Größen bis zu 20 nm hergestellt werden.

M. Kröll, W.J. Blau, D. Grandjean ,R.E. Benfield ,F. Luis, P. M. Paulus und L.J. de Jongh beschreiben in Magnetic properties of ferromagnetic nanowires embedded in nanoporous alumina membranes, Journal of Magnetism and Magnetic Materials 249 (2002) S. 241-245, Eisen-, Nickel- und Kobalt-Nanodrähte, die mittels nanoporösen Membranen aus Al₂O₃ hergestellt wurden. Diese ließen sich in Bezug auf Durchmesser (5-250 nm) und Länge (bis zu einigen Hundert Mikrometern) einstellen.

S. Kavita, V. R. Reddy, A. Gupta und M. Gupta untersuchten in Preparation of Fe/Pt Films with Perpendicular Magnetic Anisotropy, Hyperfine Interactions (2005) 160, S. 157-163, die Strukturen und magnetischen Eigenschaften von dünnen äquiatomaren FePt-Filmen in L1₀-Anordnung, die durch Ionenstrahlsputtern und anschließendem Tempern hergestellt wurden.

Die US 2002/0158342 A1 offenbart ein Element, das ein Substrat, auf das eine Vielzahl von Nanozylindern aufgebracht ist, umfasst, wobei jeder Nanozylinder übereinander liegende Schichten aufweist, die abwechselnd aus Atomen eines magnetischen Elements und eines nicht-magnetischen Elements bestehen. Dessen Herstellung erfolgt mittels eines Diblockcopolymers, auf das zumindest teilweise eine Metallschicht abgeschieden wird, die nach dem Ausrichten und Entfernen einer Komponente des Diblockcopolymers Nanozylinder ausbilden.

Ausgewählte binäre Legierungssysteme können jedoch ebenfalls die gewünschten Eigenschaften aufweisen wie z. B. das System Fe-Pt, Fe-Au oder Co-Pt. Durch kinetische Hemmung wird bei der vorzugsweise durch Aufdampfprozesse durchgeführten Materialsynthese eine wirkungsvolle Ordnungseinstellung der gewünschten L1₀-Phase mit senkrechter magnetokristalliner Anisotropie verhindert. Vielmehr kristallisiert das System bei Raumtemperatur in der ungeordneten fcc-Phase mit statistischer Besetzung der Gitterplätze. Durch geeignete Aufdampfparameter kann jedoch die gewünschte Orientierung eingestellt werden. Hierdurch lassen sich Materialkombinationen, für die L1₀-Anordnung keine thermodynamisch stabile Konfiguration darstellt, künstlich herstellen. Ein Beispiel hierfür ist die monolagenweise Abscheidung von Fe und Au.

Aus Y.H. Huang, H. Okumura, G.C. Hadjipanaysis und D. Weller, CoPt and FePt nanowires by electrodeposition, J. Appl. Phys. 91, S. 6869-6871, 2002, ist ein Verfahren zur Herstellung von Nanozylindern aus CoPt und FePt durch elektrolytische Abscheidung und Ausglühen bei 700 °C bekannt.

Ausgehend hiervon ist es die Aufgabe der vorliegenden Erfindung, ein Verfahren zur Herstellung eines derartigen Elements vorzuschlagen, das die vorher genannten Nachteile und Einschränkungen nicht aufweist. Insbesondere soll dieses Verfahren die Herstellung eines Elements ermöglichen, das eine möglichst perfekte, laterale Ordnung der Strukturen bei hinreichender Entkopplung der einzelnen Strukturelemente aufweist, eine großflächige Anordnung im Bereich einiger cm² besitzt, eine nahezu senkrechte magnetische Anisotropie zeigt und eine möglichst monodisperse Verteilung der Strukturgrößen aufweist, wobei die Strukturgröße in der Größenordnung von ca. 10 nm liegt.

Diese Aufgabe wird durch die Verfahrensschritte des Anspruchs 1 gelöst. Die Unteransprüche beschreiben vorteilhafte Ausgestaltungen der Erfindung.

Das erfindungsgemäße Verfahren umfasst die Verfahrensschritte a) bis d).

Gemäß Verfahrensschritt a) wird zunächst ein Substrat bereitgestellt, das nach folgenden Kriterien ausgewählt wird: Als Substratmaterialien sind alle Materalien geeignet, sofern Sie zu einer der folgenden beiden Materialklassen gehören:
- Amorphe Systeme wie z.B. Glas, die vorzugsweise für Fe-Pd sowie Fe-Au geeignet sind, und
- Kristalline Systeme mit geeigneter Gitterkonstante zur Mediation des Wachstums der MX-Filme in derjenigen Wachstumsrichtung, die eine senkrechte Ausrichtung der Magnetisierung ermöglicht. Für Fe-Pt besonders geeignet sind MgO (001), GaAs (001) oder SrTiO₃ (001).

Anschließend wird gemäß Verfahrensschritt b) das Substrat mit einer nanoporösen Membran aus Al₂O₃ bedeckt, wobei der Durchmesser, die Abstände und die Anordnung der Poren in der Al₂O₃-Membran entsprechend den gewünschten Parametern der Nanozylinder gewählt werden.

Im sich hierzu anschließenden Verfahrensschritt c) werden auf dem mit der nanoporösen Membran bedeckte Substrat abwechselnd solange jeweils eine oder mehrere Atomlagen Atome M eines magnetischen Elements und Atome X eines nicht-magnetischen Elements abgeschieden (deponiert), bis der gewünschte Wert der Höhe der Nanozylinder und der Anzahl der Schichten erreicht ist. Vorzugsweise werden die Atome jeweils mittels eines Elektronenstrahlverdampfers abgeschieden (Molekularstrahlepitaxie). Die hierzu erforderlichen mäßigen Aufdampftemperaturen im Bereich von 250 °C bis 400 °C ermöglichen eine nahezu vollständige Ordnung der deponierten Schichten. Schichten, die auf diese Weise hergestellt werden, zeigen eine nahezu perfekte L1₀-Ordnung.

Schließlich wird gemäß Verfahrensschritt d) die Al₂O₃-Membran vorzugsweise mit einem hierzu geeigneten Lösungsmittel wie Wasser oder Alkohol von der Oberfläche des Substrat entfernt, so dass an Stelle der Poren der Membran Nanozylinder auf dem Substrat stehen bleiben.

Ein mit dem erfindungsgemäßen Verfahren hergestelltes Element besteht aus einem Substrat, auf das eine Vielzahl von Nanozylindern, die auch als Nanodots, Nanopunkte oder Nanosäulen bezeichnet werden, aufgebracht ist. Hierbei weist jeder Nanozylinder vier, fünf, sechs, sieben, acht, neun, zehn, elf, zwölf oder mehr übereinander liegende Schichten auf. Die Schichten aus denen sich die Nanozylinder zusammensetzen, bestehen hierbei jeweils abwechselnd aus Atomen eines magnetischen Elements M und eines nicht-magnetischen Elements X.

Erfindungsgemäß werden M = Fe, Co oder Ni als Atome eines magnetischen Elements und X = Pd, Pt, Rh oder Au als Atomen eines nicht-magnetischen Elements gewählt. Besonders bevorzugt sind hierbei die Kombinationen Fe-Pt, Fe-Au Co-Pt, Co-Au, Co-Ni und Co-Pd.

Vorzugsweise umfasst jede Schicht 1 bis 10 Atomlagen, wobei in einer besonders bevorzugten Ausgestaltung jede Schicht dieselbe Anzahl von Atomlagen aufweist wie diejenigen Schichten, die ihre übernächsten Nachbarn sind.

Die Anzahl und Dicke der Schichten haben Einfluss auf die magnetischen Eigenschaften der Nanozylinder. So zeichnet sich die L1₀-geordnete Phase im System Fe-Pt durch alternierende Atomlagen aus Fe und Pt aus, und zeigt infolge der außergewöhnlich großen magnetokristallinen Anisotropie auch eine sehr große Koerzitivfeldstärke. Dieser Effekt hat jedoch zur Folge, dass für eine Ummagnetisierung in Speichermedien sehr große Ummagnetisierungsfeldstärken (>500 mT) benötigt würden, die nur schwer auf Strukturgrößen in der Größenordnung von einigen Nanometern anzuwenden sind.

Die Ursache für diese außergewöhnliche magnetokristalline Anisotropie liegt in der starken Wechselwirkung zwischen Fe- und Pt-Atomen. Durch Ausnutzung dieser Polarisation lässt sich die Koerzitivfeldstärke jedoch einstellen. Hierfür wird die Dicke der Fe-Schicht variiert, z.B. bewirkt die Verwendung von zwei Monolagen Fe eine signifikante Verringerung der Koerzitivfeldstärke in praktikable Bereiche (250 mT) bei gleichbleibender Stabilität der gespeicherten Information gegenüber externen Feldern und thermischer Anregung. Durch geeignete Wahl der Schichtdicken und der Aufdampfparameter lässt sich eine Koerzitivfeldstärke von 50-1000 mT einstellen. Die obere Grenze ist durch die Sättigungsmagnetisierung einer vollständig geordneten Schicht gegeben. Ein erwünschter Nebeneffekt einer derartigen Struktur ist die Verkippung des Magnetisierungsvektors um ca. 15° aus der Schichtebene. Diese Verkippung ermöglicht einen vereinfachten Ummagnetisierungsprozess und eine höhere Auslesesicherheit bei der Verwendung des erfindungsgemäßen Elements als magnetisches Speichermedium.

Vorzugsweise besitzen die Nanozylinder einen Durchmesser von 10 nm bis 100 nm, besonders bevorzugt von 20 nm bis 50 nm, und einen Abstand von 10 nm bis 100 nm, besonders bevorzugt von 20 nm bis 50 nm. Vorzugsweise sind die Nanozylinder in Form einer zweidimensionalen kubischen oder hexagonalen Struktur auf dem Substrat angeordnet. Die lateralen Strukturgrößen werden durch den Durchmesser, die Abstände und die Anordnung der Poren in der Al₂O₃-Membran eingestellt.

Weiterhin besitzen die Nanozylinder vorzugsweise eine Höhe von 2 bis 500 nm, besonders bevorzugt von 5 nm bis 100 nm. Der gewünschte Wert der Höhe der Nanozylinder wird durch die Variation der deponierten Materialmenge in diesem weiten Bereich eingestellt.

Mit dem erfindungsgemäßen Verfahren hergestellte Elemente lassen sich einsetzen als magnetische Speichermedien, als Schaltelemente oder als Sensoren.

Die Erfindung weist insbesondere die im Folgenden erwähnten Vorteile auf.

Durch den Einsatz von selbstgeordneten, nanoporösen Al₂O₃-Masken ist eine hohe Perfektion der erzeugten Fe-Pt-Nanozylinder gegeben. Nach Entfernung der Masken von dem Substrat verbleiben hochgeordnete Anordnungen aus L1₀-geordneten Fe-Pt-Nanozylindern mit einem Durchmesser, der vom Durchmesser der Poren in den eingesetzten Al₂O₃-Masken abhängt. Dies wurde durch AFM-Untersuchungen belegt, in denen L1₀-geordnete Fe-Pt-Nanozylinder mit einem Durchmesser von 15-50 nm nachgewiesen wurden. Eine weitere Verringerung des Durchmessers der Fe-Pt-Nanozylinder ist durch weitere Optimierung der Al₂O₃-Masken zu erreichen.

Bisher konnte eine großflächige Anordnung der Nanozylinder über einen Bereich von etwa 500x500 µm² erzielt werden. Bei weiterer Optimierung der Masken lassen sich Arrays in der Größenordnung von einigen cm² herstellen.

Die senkrechte Anisotropie ist eine inhärente Eigenschaft der L1₀-Phase im System Fe-Pt. Die Ausrichtung des Magnetisierungsvektors kann durch die gewählten Herstellungsbedingungen (Bedampfungsraten, Substrattemperatur und Schichtdicken) nahezu beliebig eingestellt werden. Eine senkrechte Ausrichtung der Magnetisierung wurde mit tiefenselektiver Mössbauer-Spektroskopie (Bestimmung der magnetischen Eigenschaften auf atomarem Niveau) und mit SQUID-Messungen (Charakterisierung von Ummagnetisierungsvorgängen) nachgewiesen.

Die Erfindung wird im Folgenden anhand von Ausführungsbeispielen näher erläutert.

Zur erfindungsgemäßen Herstellung eines Elements (Arrays) aus Fe-Pt-Nanozylindern wurden Substrate aus MgO (001)-Einkristallen bereitgestellt. Vor der Abscheidung (Deposition) der Schichten wurden die Substrate jeweils mit einer nanoporösen Al₂O₃-Maske versehen. Die Porengröße betrug 20 nm, der mittlere Abstand der Poren 25 nm.

Hieran anschließend wurden Fe- oder Pt-Atome (Reinheit jeweils besser als 99,95 %) mittels Molekularstrahlepitaxie bei definierten Substrattemperaturen auf die Substrate abschieden.

Über ein Heizfilament konnte die Substrattemperatur und somit die Abscheidetemperatur eingestellt werden. Der Abstand zwischen den Materialquellen und dem Substrat betrug etwa 0,3 m. Um eine geordnete L1₀-Phase zu erhalten, wurden die Schichten bei einer Abscheidetemperatur von 350°C mit Abscheideraten von 0,3 nm/min (Fe) bzw. 0,01 nm/min (Pt) deponiert. Die Gesamtschichtdicke betrug etwa 4 nm. Um eine atomlagenweise Abscheidung durchzuführen, waren der Probenhalter und die Materialquellen jeweils mit einem Shutter versehen, die jeweils nach Erreichen der gewünschten Schichtdicke geschlossen wurden. Zur Abscheidung des zweiten Elements wurde der entsprechende Shutter geöffnet und das betreffende Element abgeschieden.

Nach erfolgter Abscheidung der Schichten und Abkühlung des Substrats in Raumatmosphäre wurde die nanoporöse Al₂O₃-Maske durch Abspülen mit Wasser oder Alkohol (Isopropanol) entfernt.

Für die hier vorgestellten Beispiele wurden nacheinander jeweils zwei Monolagen Eisen und zwei Monolagen Platin auf Substrate aus MgO (001)-Einkristallen aufgedampft, bis insgesamt acht oder zwölf übereinander liegende Schichten abgeschieden wurden, die abwechselnd aus zwei Monolagen Eisen und aus zwei Monolagen Platin bestanden.

Die erfindungsgemäß hergestellten Elemente aus FePt-Nanozylindern zeigen eine senkrechte Ausrichtung der Magnetisierung für alle hergestellten Teilchendurchmesser (25 nm, 50 nm) mit einer leichten Verkippung um ca. 10° bis 20° gegen die Schichtnormalen. Durch Einsatz höherer Wachstumstemperaturen kann eine vollständige Ausrichtung und damit eine vollständige Ordnungseinstellung des Schichtsystems erzielt werden. Eine leichte Verkippung ist jedoch vorteilhaft für die Anwendung als Speichermedium, da einerseits die gewünschte Information durch die hohe magnetokristalline Anisotropie gespeichert werden kann, andererseits aber erwünschte Ummagnetisierungsvorgänge durch externe Felder z.B. im Schreibkopf erleichtert werden.

## Patentansprüche

1. Verfahren zur Herstellung eines Elements, das ein Substrat, auf das eine Vielzahl von Nanozylindern aufgebracht ist, umfasst,
wobei jeder Nanozylinder mindestens vier übereinander liegende Schichten aufweist, die abwechselnd aus Atomen M = Fe, Co oder Ni und Atomen X = Pd, Pt, Rh oder Au bestehen,
mit den Verfahrensschritten
a) Bereitstellen eines Substrats,
b) Bedecken des Substrats mit einer nanoporösen Membran aus Al₂O₃,
c) Abwechselndes Bedampfen des mit der nanoporösen Membran bedeckten Substrats mit Atomen M und Atomen X,
d) Entfernen der Membran, so dass an Stelle der Poren der Membran Nanozylinder auf dem Substrat stehen bleiben, und wobei die Atome bei Aufdampftemperaturen im Bereich von 250 °C bis 400 °C abgeschieden werden.

2. Verfahren nach Anspruch 1, wobei das Bedampfen so erfolgt, dass jede Schicht 1 bis 10 Atomlagen umfasst.

3. Verfahren nach Anspruch 1 oder 2, wobei das Bedampfen so erfolgt, dass jede Schicht dieselbe Anzahl von Atomlagen aufweist wie ihre übernächste Schicht.

4. Verfahren nach einem der Ansprüche 1 bis 3, wobei Nanozylinder mit einem Durchmesser von 10 nm bis 100 nm und einer Höhe von 2 bis 100 nm hergestellt werden.

5. Verfahren nach einem der Ansprüche 1 bis 4, wobei Nanozylinder, die im Abstand von 10 nm bis 100 nm angeordnet sind, hergestellt werden.

6. Verfahren nach einem der Ansprüche 1 bis 5, wobei Nanozylinder, die in einer kubischen oder hexagonalen Struktur auf dem Substrat angeordnet sind, hergestellt werden.

7. Verfahren nach einem der Ansprüche 1 bis 6, wobei die Atome jeweils mittels Elektronenstrahlverdampfern abgeschieden werden.

8. Verfahren nach einem der Ansprüche 1 bis 7, wobei die Membran mittels eines Lösungsmittels vom Substrat abgelöst wird.

## Claims

1. A method for the production of an element comprising a substrate onto which a multitude of nanocylinders has been applied, with every nanocylinder having at least four superimposed layers which alternately consist of atoms M = Fe, Co or Ni and atoms X = Pd, Pt, Rh or Au, having the **method steps of**
a) providing a substrate,
b) covering the substrate with a nanoporous membrane made of Al₂O₃,
c) alternately vapour-depositing the substrate covered with the nanoporous membrane with atoms M and atoms X,
d) removing the membrane such that nanocylinders remain in place of the pores of the membrane,
and wherein the atoms are deposited at vapour deposition temperatures within the range of from 250°C to 400°C.

2. Method according to claim 1, wherein the vapour deposition is carried out such that every layer comprises 1 to 10 atom layers.

3. Method according to claim 1 or 2, wherein the vapour deposition is carried out such that every layer has the same number of atom layers as its next layer but one.

4. Method according to any one of claims 1 to 3, wherein nanocylinders with a diameter of 10 nm to 100 nm and a height of 2 to 100 nm are produced.

5. Method according to any one of claims 1 to 4, wherein nanocylinders arranged with a spacing of 10 nm to 100 nm are produced.

6. Method according to any one of claims 1 to 5, wherein nanocylinders arranged on the substrate in a cubic or hexagonal structure are produced.

7. Method according to any one of claims 1 to 6, wherein the atoms are each deposited by means of electron beam evaporators.

8. Method according to any one of claims 1 to 7, wherein the membrane is detached from the substrate by means of a solvent.

## Revendications

1. Procédé de fabrication d'un élément comportant un substrat portant un ensemble de nanocylindres,
procédé selon lequel
chaque nanocylindre comporte au moins quatre couches superposées constituées en alternance d'atomes M = Fe, Co ou Ni et d'atomes X = Pd, Pt, Rh ou Au,
procédé comprenant les étapes suivantes :
a) utilisation d'un substrat,
b) recouvrement du substrat avec une membrane nanoporeuse en Al₂O₃,
c) évaporation en alternance du substrat couvert de la membrane nanoporeuse avec des atomes M et des atomes X,
d) enlèvement de la membrane pour laisser subsister aux endroits des pores de la membrane, les nanocylindres sur le substrat, et
les atomes sont déposés à des températures d'évaporation comprises dans une plage de 250°C à 400°C.

2. Procédé selon la revendication 1,
selon lequel
l'évaporation se fait de façon que chaque couche comporte entre 1 et 10 couches d'atomes.

3. Procédé selon la revendication 1 ou 2,
**caractérisé en ce que**
l'évaporation se fait de façon que chaque couche comporte le même nombre de couches d'atomes que la seconde couche suivante.

4. Procédé selon l'une des revendications 1 à 3,
selon lequel
on réalise des nanocylindres d'un diamètre compris entre 10 nm et 100 nm et une hauteur comprise entre 2 et 100 nm.

5. Procédé selon l'une des revendications 1 à 4,
selon lequel
les nanocylindres sont réalisés à une distance comprise entre 10 nm et 100 nm.

6. Procédé selon l'une des revendications 1 à 5,
selon lequel
on réalise les nanocylindres dans une structure cubique ou hexagonale sur le substrat.

7. Procédé selon l'une des revendications 1 à 6,
selon lequel
on dépose les atomes chaque fois par vaporisation par faisceaux d'électrons.

8. Procédé selon l'une des revendications 1 à 7,
selon lequel
on dissout la membrane du substrat à l'aide d'un solvant.
